# EUROPEAN PATENT APPLICATION

(11) **EP 0 691 154 A1**
(43) Date of publication of application: **10.01.1996**
(21) Application number: 95304747.9
(22) Date of filing: 07.07.1995
(51) Int. Cl.: B01D 53/02, C01B 21/24

(54) **Purification of nitric oxide**

(30) Priority: 07.07.1994 US 271592; 07.07.1994 US 271688
(71) Applicant: THE BOC GROUP, INC., Murray Hill, New Jersey 07974 (US)
(72) Inventor: Sheu, Lien-Lung, Scotch Plains, New Jersey 07090 (US); Ramachandran, Ramakrishnan, Allendale, New Jersey 07401 (US); Galica, Theodore R., Glen Gardner, New Jersey 08826 (US); Bülow, Martin, Basking Ridg, New Jersey 07920-3043 (US)
(74) Representative: Bousfield, Roger James

(57) **Abstract**

A process for treating nitric oxide gas stream to remove nitrogen dioxide therefrom, which comprises passing the gas stream through a bed of metal cation-free adsorbent comprising silica, alumina, zeolites and mixtures thereof, thereby depleting the gas stream of nitrogen dioxide.

## Description

This invention is directed to a process for purifying nitric oxide, and more particularly to a process in which nitrogen dioxide is removed from nitric oxide by adsorption.

Nitric oxide has recently been found to play an important role in life processes in humans and animals. For example, it helps maintain blood pressure by dilating blood vessels, and kills foreign invaders in the body's immune system. Studies indicate that extraordinary benefits may be obtained by administering small dosages of nitric oxide to patients who suffer from certain illnesses or diseases. Of particular interest is the prospect of reducing pulmonary vasoconstriction in pediatric patients with congenital heart disease complicated by pulmonary artery hypertension by having the patients inhale oxygen-enriched air containing very small concentrations of nitric oxide.

Nitric oxide is a relatively stable gas when it is in the pure state or mixed with an inert gas, such as nitrogen or argon. However when it is mixed with oxygen it reacts rapidly with the oxygen to form nitrogen dioxide, a substance that is highly toxic to humans. The nitrogen dioxide reacts with water to form nitric and nitrous acids, which, when inhaled can cause severe pulmonary oedema, acid pneumonitis or even death. Because of the highly toxic character of nitrogen dioxide, nitric oxide that is intended for inhalation use by humans is generally purified to remove any nitrogen dioxide that is initially in the nitric oxide product as a result of the manufacturing process, and the purified product is stored and shipped in an oxygen-free environment to prevent the subsequent generation of nitrogen dioxide in the storage or shipping container.

Nitric oxide is generally administered to a patient by diluting a nitrogen-nitric oxide concentrate gas containing about 1000 ppm nitric oxide with oxygen or oxygen-enriched air carrier gas to produce an inhalation gas containing nitric oxide in the desired concentration range (usually about 0.5 to 200 ppm, based on the total volume of the inhalation gas). Calculations based on nitric oxide chemical kinetics suggest that if pure oxygen is mixed with the above-described nitrogen-nitric oxide concentrate to produce a gas mixture having a nitric oxide concentration of 200 ppm, it takes only about 3 seconds for the concentration of nitrogen dioxide in the gas mixture to build up to 3 ppm. The currently accepted upper limit for nitrogen dioxide inhalation is 5 ppm (based on the total volume of breathing gas being inhaled). Assuming that this gas mixture is inhaled by a patient within 3 seconds after mixing the nitrogen-nitric oxide concentrate and oxygen, the amount of nitrogen dioxide initially present in the nitric oxide-nitrogen concentrate would have to be very low to ensure that the nitrogen dioxide concentration in the inhalation gas does not exceed 5 ppm. To minimize the risk of exceeding the 5 ppm upper limit, it is desirable that the concentration of nitrogen dioxide in the nitrogen-nitric oxide supply vessel be as low as possible, and it is most preferred that it not exceed about 1 ppm.

Nitrogen dioxide is produced as a byproduct of most, if not all, nitric oxide production processes. Various techniques are employed to remove nitrogen dioxide from the nitric oxide. United States Patent No. 3,489,515 discloses the purification of nitric oxide by washing the nitric oxide with a dilute aqueous solution of nitric acid. The water reacts with the nitrogen dioxide to produce nitric and nitrous acids, which can be washed from the gaseous product stream by washing the stream with water. This method is not satisfactory for producing medical grade nitric oxide because it does not adequately reduce the concentration of nitrogen dioxide in the product gas stream. Nitrogen dioxide can also be removed from nitric oxide by cryogenic distillation. This method likewise leaves a lot to be desired because of the high capital cost of distillation equipment and because not all of the valuable nitric oxide is recovered during the distillation.

Another purification technique that has been reported is adsorption using as adsorbent a bed of the activated coke or activated charcoal (see U. S. Patent Nos. 2,568,396 and 4,149,858). This procedure suffers from the disadvantages that the activated coke and activated charcoal do not efficiently remove nitrogen dioxide from the gas stream, they adsorb more nitric oxide than is desired and they tend to catalyse the disproportionation of nitric oxide to nitrogen dioxide and nitrogen.

It is known that certain zeolites preferentially adsorb nitrogen dioxide from gas streams containing nitric oxide and nitrogen dioxide without also adsorbing the nitric oxide in the gas stream. For example, U. S. Patent No. 4,153,429 relates to the removal of NOₓ from gas streams, discloses the use of zeolite Y adsorbent containing 8 to 30 equivalent percent metal cations to remove nitrogen dioxide from a gas mixture. It is stated that zeolites do not adsorb nitric oxide, and to eliminate nitric oxide from the gas mixture, stoichiometric quantities of oxygen must be present with respect to the quantity of nitric oxide to be removed from the gas stream. Nitric oxide is oxidised to nitrogen dioxide in the presence of oxygen.

Our copending U. S. Patent Application Serial No. 129,467, filed September 30, 1993, discloses the removal of nitrogen dioxide from a nitric oxide gas stream by passing the gas stream through a zeolite selected from types A, X and Y zeolites, mordenite, faujasite and chabazite. Although these adsorbents exhibit superior nitrogen dioxide adsorption properties it has been found that they also possess the undesirable attribute of catalysing the disproportionation of nitric oxide to nitrogen dioxide and nitrogen. It is believed that the metal cations on the zeolite cause the catalytic reaction.

Because of the high toxicity of nitrogen dioxide, highly effective methods for purifying nitric oxide intended for medical use in particular, without concomitantly producing additional nitrogen dioxide, are continuously sought.

The present invention provides a simple and efficient method of achieving this objective.

In accordance with the invention, there is provided a process for treating a nitric oxide gas stream to remove nitrogen dioxide therefrom, which comprises passing the gas stream through a bed of metal cation-free adsorbent comprising silica, alumina, zeolites and mixtures thereof, thereby depleting the gas stream of nitrogen dioxide.

The term "metal cation-free" when used herein means that the adsorbent contains no more than trace amounts of metal cations.

It is desirable that the concentration of nitrogen dioxide in the gas stream is generally reduced to not more than about 700 ppm, and is preferably reduced to no more than about 10 ppm, and most preferably reduced to no more than about 3 ppm.

According to a preferred aspect of the invention, the concentration of nitrogen dioxide in the gas stream being treated is reduced, in a preliminary step, for example to a concentration of about 5000 ppm or less, for example by washing the gas stream with dilute nitric acid and/or water, and the gas stream is then passed through a bed of one or more of the above-mentioned adsorbents in the process of the invention to remove nitrogen dioxide. The concentration of nitrogen dioxide exiting the bed of adsorbent is generally reduced to not more than about 700 ppm, and is preferably reduced to no more than about 10 ppm, and is most preferably reduced to no more than about 3 ppm.

In addition, the nitric oxide gas stream can be diluted with a sufficient amount of an inert gas, such as nitrogen, helium or argon, to reduce the concentration of nitric oxide in the gas stream to a predetermined concentration, generally to about 5 to about 5000 ppm, and the diluted gas mixture is then purified by the process of the invention.

In a third embodiment, the nitric oxide gas stream is first partially purified by the process of the invention, thereby reducing the concentration of nitrogen dioxide in the gas stream to a given level, and the partially purified gas stream is diluted with a sufficient amount of an inert gas, such as nitrogen, argon or helium, to reduce the concentration of nitric oxide in the gas stream to the desired final concentration, generally to about 5 to about 5000 ppm.

When administering NO-containing gas streams to human patients, it is desirable that very little or no NO in the gas stream be converted to NO₂, not only because of the toxicity of NO₂ to humans, but also because of the importance of administering an accurate dosage of NO to the patient. As such it is commonly expedient for the gas stream to be substantially free of oxygen so that oxidation of NO to NO₂ does not occur.

However, it is also possible prior to performing the process of the invention to introduce oxygen or an oxygen-containing gas to the gas stream. In a most preferred embodiment of the invention, a nitric oxide-inert gas mixture is first blended with an oxygen-containing gas, which may be substantially pure oxygen or an oxygen-inert gas mixture, such as air or oxygen-enriched air, to reduce the nitric oxide to the desired level, usually about 1 to about 200 ppm. The resulting mixture is then passed through one or more beds of the above-mentioned metal cation-depleted adsorbents, thereby reducing the nitrogen dioxide concentration in the gas mixture to the desired level, generally not more than about 3 ppm. In this embodiment, the gas stream may be humidified before, during or after the oxygen blending step.

The conditions under which the adsorption is carried out are not critical. It can be carried out at temperatures in the range of about minus 50 to about 300°C. or higher, and at absolute pressures in the range of about 0.5 to about 200 bar or higher. To simplify the process, the adsorption is preferably carried out at temperatures in the range of about 0 to about 100°C. and at absolute pressures in the range of 1 to about 10 bar.

The adsorption can be carried out in a single bed of adsorbent or in a battery of two or more adsorption beds arranged in parallel and operated out of phase, so that at least one bed is undergoing adsorption while the adsorbent in another bed is being replaced or regenerated.

The nitric oxide that is purified by the process of the invention can be produced by any of several well known manufacturing methods. According to one method, sulphur dioxide and nitric acid are reacted in the presence of water to produce the nitric oxide. A number of by-products, including sulphuric acid, nitrous oxide (laughing gas) and nitrogen dioxide are produced in this process. The raw product stream also contains unreacted sulphur dioxide. The sulphuric acid is easily removed from the product gas by phase separation followed by a water wash. The nitrous oxide does not interfere with the use of the nitric oxide in an inhalation gas since it has a very low toxicity. However, as explained above, nitrogen dioxide, and sulphur dioxide, must be substantially completely removed from the product gas because of the extreme toxicity of these compounds.

Nitric oxide can also be produced by combusting ammonia with oxygen at temperatures of about 1000°C. By-products of this process include nitric acid, nitrous acid, nitrous oxide, nitrogen dioxide and nitrogen. The nitric and nitrous acids can be removed by water washing the product gas. Significant quantities of nitrogen dioxide can be removed from the product gas by water washing it with the dilute nitric acid obtained as a byproduct, and subsequently washing the product gas with substantially pure water. Since this process uses oxygen (or air) as a reactant, and since nitric oxide reacts with oxygen to produce nitrogen dioxide, care must be taken to ensure that all of the oxygen is consumed in the reaction. This can be accomplished by conducting the combustion in the presence of excess ammonia.

A third method of producing nitric oxide is by subjecting air to a high voltage electric arc. This procedure is convenient for on site production of small quantities of nitric oxide. Side products which must be removed from the nitric oxide produced by this method include nitrogen dioxide and ozone.

The nitric oxide-rich gas product made by the above processes may contain nitrogen, depending upon which process is used. This poses no problem with respect to the use of the nitric oxide product in inhalation therapy, because nitrogen is nontoxic and is generally used as a diluent for the nitric oxide. The nitric oxide gas is, however, stored in a substantially oxygen-free environment. In this context "substantially oxygen-free" means that the nitric oxide product contains no more than about 10 ppm oxygen. It is important to prevent oxygen from coming into contact with the nitric oxide gas product, since oxygen reacts with nitric oxide to form nitrogen dioxide, until immediately prior to inhalation by the patient.

As mentioned above, the adsorbents used in the invention are adsorbents which are either cation depleted or substantially free of metallic cations. Cation depleted zeolites can comprise Si-rich species of the LTA-type such as ZK-4 and ZK-5 and α as well as Y-type zeolites as synthesised. Metal cation-free adsorbents which are useful in the invention include silica gel, alumina, and metal cation-free synthetic zeolites, such as dealuminated Y-type zeolites, silicalite-1 and silicalite-2 as well as aluminium deficient natural zeolites such as mordenite, chabazite, etc. Preferred adsorbents include silica (especially silica gel), alumina, dealuminated Y zeolites, silicalite-1 and silicalite 2.

The terms "metal cation-free" and "substantially free of metal cations" when use in reference to an adsorbent, mean that the adsorbent contains no more than trace amounts of metal cations. This feature of the adsorbents used in the invention is important because, as noted above, metal cations catalyse the disproportionation of nitric oxide to nitrogen dioxide and nitrogen.

In preferred embodiments of the invention, the adsorbents used are solids, either amorphous, such as silica gel, or crystalline, such as zeolite structures, whereas the silica gel is clearly free of metal cations and of aluminium and the zeolite solids are substantially free of alumina groups. Specifically, the zeolite adsorbents have silicon to aluminium atomic ratios of at least 100. Included in this group of adsorbents are molecular sieves of the FAU, MFI and MEL type structures, including zeolites that have been made alumina-deficient by dealumination and molecular sieves that are directly synthesized without introducing alumina groups into the lattice structure. They are all generally hydrophobic and do not adsorb water/moisture.

Alumina-deficient molecular sieves useful in such embodiments of the invention include dealuminated type Y zeolite (DAY), the substantially aluminium free species of the groups ZSM-5, ZSM-11 and ZSM-20, all having silicon to aluminium atomic ratios of at least about 100. Other synthesized molecular sieves that are substantially free of alumina groups which are useful in the invention include those having structures analogous to ZSM-5 and ZSM-11, known as silicalite-1 and silicalite-2, respectively. each of which are substantially free of alumina groups in their structures. Preferred molecular sieves are DAY, alumina-deficient ZSM-5 and silicalite-1, all of which are substantially metal cation-free and all of which are commercially available.

The terms "alumina-deficient" and "dealuminated", when used herein in reference to molecular sieves mean that the ratio of silicon to aluminum atoms in the sieves is at least about 100:1, i.e., the ratio of silica to alumina groups in the sieve is at least 200:1.

Alumina-deficient molecular sieves can be prepared, for example, by steaming or acid washing a zeolite of the desired structure, or by treating the zeolite with silicon tetrafluoride and ammonium thiosilicate, any of which procedures results in the manufacture of a molecular sieve having a crystalline structure comprised substantially of tetrahedral silicon dioxide units. The particular method of dealumination of the adsorbents to be used in the invention is not critical and methods of effecting the desired result are well known and form no part of the present invention.

The metal cation content of the molecular sieves from which the adsorbents to be used in the invention are made can also be decreased by replacing the metal cations with hydrogen ions, i.e. protons. This can be accomplished, for example, by replacing metal cations with ammonium ions and subsequently driving ammonia from the exchanged adsorbent, thereby leaving protons in place of the metal cations. This procedure is likewise well known and forms no part of the present invention.

If desired, the metal cation content of the precursor molecular sieves can be reduced by a combination of the above two procedures, that is, by increasing the silica-to-alumina ratio in the adsorbent and by replacing some or all of the remaining metal cations with protons.

The conditions under which the adsorption process is carried out are not critical. The adsorption can be carried out at any temperature below the decomposition temperature of the nitric oxide product and the adsorbent, and is generally carried out at the temperature which provides optimum separation. It is preferred to conduct the adsorption process at a temperature which is congruous with other steps of the product manufacturing process, and particularly at atmospheric temperatures and pressures, if possible. Those skilled in the art can easily determine which operating conditions are best suited for their purposes.

When the nitric oxide product gas is to be used in an inhalation gas it is diluted with an oxygen-free inert gas which is nontoxic to humans and animals and which can later be easily blended with oxygen or oxygen-enriched air to make up an inhalation gas having the desired concentration of nitric oxide. Suitable diluent gases include nitrogen, argon, helium, etc. The preferred diluent gas is nitrogen because of the ready availability and low cost of this gas. The nitric oxide-rich gas is preferably diluted with the oxygen-free inert gas to a concentration that can be conveniently blended with the oxygen or oxygen-enriched gas that is used to make up the inhalation gas. Typical inert gas-nitric oxide gas mixtures contain about 5 to about 5000 ppm nitric oxide. Preferred mixtures contain about 5 to about 2000 ppm nitric oxide. The inert gas-nitric oxide mixture can later be blended with oxygen or oxygen-enriched air to provide a gas mixture having the desired nitric oxide concentration (usually in the range of about 0.5 to about 200 ppm nitric oxide).

The process of the invention can be used directly to purify a nitric oxide-rich gas, such as the product obtained from any of the above manufacturing processes, or it can be used to purify an inert gas-nitric oxide concentrate prepared by diluting the nitric oxide-rich gas with an inert gas. In both such cases the process is effective to reduce the concentration of nitrogen dioxide in the purified gas to any desired value, such as below about 1 ppm. It is generally advantageous to purify the nitric oxide-rich gas prior to dilution, because the volume of gas passed through the adsorbent bed will be relatively small, and also because the concentration of nitrogen dioxide in the inert gas-diluted product can be easily adjusted to any desired final value during the inert gas dilution step.

The adsorbents used in the process of the invention generally have the additional advantage of effecting the removal of other undesirable impurities, such as sulphur dioxide, from the gas stream being purified. This is desirable because sulphur dioxide is highly toxic.

With regard to water/moisture, it is usually desirable that this is removed from the gas stream if the gas product is to be stored. Such removal can be effected by any one or more of various techniques, such as condensation or adsorption using the process of the invention other than with hydrophobic adsorbents. In such cases, it is preferable to remove sufficient moisture from the gas mixture to render the stream substantially anhydrous. By "substantially anhydrous" is meant the gas stream contains no more than about 500 ppm water vapour. The moisture content can be easily be reduced to about 100 ppm or less as it passes through the adsorbent used to remove nitrogen dioxide from the product gas stream.

If, however, the gas product is to be administered to a patient as an inhalation gas, it is usually desirable not to remove the water/moisture and the process of the invention is preferably effected with a hydrophobic adsorbent. Thus, the process of the invention can be practised in a very useful way to remove nitrogen dioxide from a nitric oxide-containing inhalation gas mixture, in particular after it has been mixed with oxygen or an oxygen-rich gas, i.e. just prior to administration to the patient. This application of the invention is particularly advantageous in that it permits the removal of nitrogen dioxide from the gas stream without also removing water vapour from the mixture. Use of the above-specified hydrophobic adsorbents avoids the need to rehumidify the inhalation gas mixture after removal of the nitrogen dioxide, which would be the case if hydrophilic adsorbents were used for purification of the oxygen-containing inhalation gas because the absence of moisture in the inhaled gas stream tends to cause drying and irritation of the patient's air passageways.

Since the quantity of adsorbent necessary to accomplish the desired result will depend not only upon the quantity of gas being treated and the concentration of nitrogen dioxide present in the feed stream, but also on the concentration of other impurities present in the gas stream that are adsorbed by the adsorbent, the size of the adsorbent bed used in the process will be influenced by the amount of impurities present in the gas stream. Thus, a somewhat larger bed of adsorbent may be required if the gas stream being purified contains moisture or other impurities.

The nitrogen dioxide-containing adsorbent can in principle be regenerated to some extent. However, it is difficult to desorb nitrogen dioxide efficiently from the adsorbent; consequently the adsorbent is preferably removed from the adsorbent bed and discarded when it is saturated with nitrogen dioxide. However, moisture can be readily desorbed from the adsorbent used in the invention. Thus, the useful life of the adsorbent can be somewhat extended by regenerating the adsorbent to remove moisture.

The invention is further illustrated by the following examples in which, unless otherwise indicated, parts, percentages and ratios are on a volume basis.

### EXAMPLE I

A stainless steel cylinder, 13 inches long and having an internal volume of 500 ml was packed with silica gel, sold by the Davison Chemical Division of W. R. Grace Company as grade No. 41, and a one-half inch layer of cotton wool was inserted into both ends of the tube to hold the adsorbent in place, and to serve as a filter.

The test gas was passed through the U-tube at a flow rate of 680 cc/minute. The effluent from the adsorbent bed was collected in a gas holder having an optical path length of 10 meters and a volume of about 2 litres. The gas holder was mounted on a MIDAC G1002 Fourier Transform Infrared (FTIR) spectrometer which recorded the FTIR measurements at a resolution of 1 cm⁻¹. To obtain a high signal/noise ratio 60 scans were used. The gas passed through the cylinder at ambient room temperature and was collected in the gas holder at an absolute pressure of 762 to 766 torr. The feed gas contains 98⁺ % NO and about 4000 ppm NO₂. After 60 standard litres of gas was passed through the silica gel bed, NO₂ was determined to be less than 1 ppm. The NO₂ level increased to about 2 ppm and 5 ppm when the volume of feed gas passed through the bed reached 360 and 530 litres, respectively.

### EXAMPLE II

In a simulated test, a gas purifier having an internal diameter of 8 inches and a length of 12 inches was charged with 10.6 Ibs. of dealuminated type Y zeolite (DAY), sold by DEGUSSA AG of Germany under the trade designation Wessalith. A gas stream having an initial composition of 50 ppm nitric oxide, 8 ppm nitrogen dioxide, 10% water vapour, 80% oxygen and the balance nitrogen was passed through the gas purifier during a run of 120 hours. The projected composition of the gas stream exiting the gas purifier at various times during the run is shown in the Table.

**TABLE**

| Administration Time, hrs | Gas Composition | | | | |
|---|---|---|---|---|---|
| | NO ppm | NO₂ ppm | O₂% | H₂O% | N₂% |
| 4 | ∼ 48 | < 0.1 | 80 | 10 | Bal |
| 24 | ∼ 48 | ∼ 0.5 | 80 | 10 | Bal |
| 72 | ∼ 48 | ∼ 1 | 80 | 10 | Bal |
| 120 | ∼ 48 | ∼ 2 | 80 | 10 | Bal |

An examination of the tabulated results shows that DAY can be expected to efficiently remove nitrogen dioxide from a gas stream without substantial removal of water vapour contained in the gas stream and without substantial disproportionation or reaction of the nitric oxide in the gas stream during the entire gas administration period.

## Claims

1. A process for treating nitric oxide gas stream to remove nitrogen dioxide therefrom, which comprises passing the gas stream through a bed of metal cation-free adsorbent comprising silica, alumina, zeolites and mixtures thereof, thereby depleting the gas stream of nitrogen dioxide.

2. A process according to Claim 1 in which the zeolite is a member of the silicon rich species of the LTA type or the FAU type zeolites or mixtures thereof.

3. A process according to Claim 1 or Claim 2 in which the metal cation-free adsorbent is a zeolite which is alumina deficient.

4. A process according to any preceding claim in which the metal cation-free adsorbent has a silicon to aluminium atomic ratio of at least about 100:1.

5. A process according to any preceding claim in which the metal cation-free adsorbents comprise type Y zeolite, type ZSM-5 zeolite, type ZSM-11 zeolite, type ZSM-20 zeolite, silicalite-1, silicalite-2 or silica gel or mixtures thereof.

6. A process according to any preceding claim in which the gas stream is pre-treated to reduce the nitrogen dioxide concentration.

7. A process according to Claim 6 in which the nitric oxide gas stream is pretreated by dilution with an inert gas.

8. A process according to Claim 6 in which the nitric oxide gas stream is pre-treated by blending it with an oxygen-containing gas.
